# EUROPÄISCHE PATENTSCHRIFT

(11) **EP 2 035 263 B1**
(45) Veröffentlichungstag und Bekanntmachung des Hinweises auf die Patenterteilung: **02.06.2010**
(21) Anmeldenummer: 07765725.2
(22) Anmeldetag: 29.06.2007
(51) Int. Cl.: B60T 1/00, F16H 63/34

(54) **BETÄTIGUNGSELEMENT FÜR DIE PARKSPERRE EINES GETRIEBES UND PARKSPERRE FÜR EIN GETRIEBE**
ACTUATING ELEMENT FOR THE PARKING LOCK OF A TRANSMISSION AND PARKING LOCK FOR A TRANSMISSION
ELEMENT D'ACTIONNEMENT POUR LE FREIN DE STATIONNEMENT D'UNE BOITE DE VITESSES ET FREIN DE STATIONNEMENT POUR UNE BOITE DE VITESSES

(30) Priorität: 05.07.2006 DE 102006030998
(43) Veröffentlichungstag der Anmeldung: 18.03.2009
(73) Patentinhaber: ZF Friedrichshafen AG, 88038 Friedrichshafen (DE)
(72) Erfinder: REICHERT, Heinz, 88677 Markdorf (DE)
(86) Internationale Anmeldenummer: PCT/EP2007/056547
(87) Internationale Veröffentlichungsnummer: WO 2008/003649

(56) Entgegenhaltungen:
- EP-A- 0 895 908
- DE-A1- 10 131 735
- DE-A1-102005 051 266
- FR-A1- 2 878 487
- US-A- 5 934 436

## Beschreibung

Die vorliegende Erfindung betrifft ein Betätigungselement für die Parksperre eines Getriebes mit einer Stellstange und einem Rollenträger, an dem eine erste Rolle zum Abrollen an einer ersten Abrollbahn an der verschwenkbaren Sperrklinke der Parksperre und eine zweite Rolle zum Abrollen an einer zweiten Abrollbahn an einem Führungsteil angeordnet sind, wobei der Rollenträger entlang eines vorbestimmten Weges in Längsrichtung der Stellstange verschoben werden kann. Die vorliegende Erfindung betrifft ferner eine Parksperre für ein Getriebe mit einem solchen Betätigungselement.

Aus dem Stand der Technik sind unterschiedliche Parksperren für Automatikgetriebe bekannt. So beschreibt die DE 101 44 063 B4 eine Parksperre, die eine Klinke und einen Rastring auf der Abtriebswelle eines Automatikgetriebes aufweist. Die Klinke kann von einer Neutralstellung in eine Sperrstellung verschwenkt werden, in der die Klinke in eine Rastvertiefung in dem Rastring eingreift und die Abtriebswelle somit sperrt. Zur Betätigung der Klinke ist ein schwenkbarer Wählhebel vorgesehen, an dem eine Stellstange angelenkt ist, an der wiederum zwei Rollen unverschiebbar und drehbar angeordnet sind. Die Stellstange und die Rollen bilden ein Betätigungselement aus. Durch das Verschwenken des Wählhebels wird die Stellstange verschoben. Beim Verschieben der Stellstange rollt die erste Rolle an einer feststehenden Wand ab, während die zweite Rolle an einer Rampe der Klinke abrollt. Durch das Abstützen der ersten Rolle an der feststehenden Wand einerseits und das Hochrollen der zweiten Rolle an der Rampe andererseits wird die Klinke in Richtung des Rastrings in die Sperrstellung verschwenkt.

FR-A 2 878 487 offenbart ein Betätigungselement für eine Parksperre nach dem Oberbegriff des Anspruchs 1 sowie eine Parksperre nach dem Oberbegriff des Anspruchs 12.

Aus der DE 101 31 735 A1 ist eine ähnliche Parksperre bekannt, die jedoch einen komplexeren Aufbau hat. So sind die beiden Rollen nicht an der Stellstange angeordnet, sondern an einem Betätigungsschlitten, der darüber hinaus verschiebbar innerhalb einer gehäusefesten Führung geführt ist. Die Stellstange, der Betätigungsschlitten mit den Rollen und die gehäusefeste Führung bilden ein Betätigungselement aus. Die Stellstange steht lediglich insofern mit dem Betätigungsschlitten in Verbindung, als dass die Bewegung der Stellstange auf den Betätigungsschlitten übertragbar ist, wenn die Stellstange verschoben wird. Darüber hinaus kann der Betätigungsschlitten entlang eines vorbestimmten Weges in Längsrichtung der Stellstange relativ zu dieser verschoben werden, wobei der Betätigungsschlitten in eine vorbestimmte Stellung zu der Stellstange vorgespannt ist. Sollte die Klinke beim Verschwenken auf einen Rastzahn des Rastrings treffen, so kann zwar die Stellstange verschoben werden der Betätigungsschlitten wird zunächst jedoch nur relativ zu der Stellstange verschoben, bis die Klinke auf eine Rastvertiefung trifft, in die sie eingreifen kann. Ist dies der Fall, so wird auch der Betätigungsschlitten aufgrund der Vorspannung in seine ursprüngliche Position verschoben, in der er die Klinke in die Sperrstellung drückt bzw. verschwenkt.

Der vorgenannte Stand der Technik hat zwar den Vorteil, dass die Längsverschiebbarkeit des Betätigungsschlittens auch dann eine Verschiebung der Stellstange ermöglicht, wenn die Klinke gerade auf einem Rastzahn aufliegt, ist jedoch auch mit Nachteilen behaftet. So weist das Betätigungselement eine Vielzahl von Bauteilen mit unterschiedlichen Verbindungsstellen auf, so dass die Konstruktion teuer und störungsanfällig ist, Darüber hinaus benötigt das bekannte Betätigungselement einen großen Bauraum, wodurch der Einsatz bei einer so genannten axialen Klinkenbetätigung nicht oder nur schwer möglich ist.

Der vorliegenden Erfindung liegt somit die Aufgabe zugrunde, ein Betätigungselement für die Parksperre eines Getriebes zu schaffen, das günstig hergestellt werden kann, stärungsunanfällig ist und wenig Bauraum benötigt. Der Erfindung liegt ferner die Aufgabe zugrunde, eine Parksperre mit einem solchen vorteilhaften Betätigungselement zu schaffen.

Die Lösung dieser Aufgabe erfolgt anhand der in Patentanspruch 1 bzw. 13 angegebenen Merkmale. Vorteilhafte Ausführungsformen der Erfindung sind Gegenstand der Unteransprüche.

Das erfindungsgemäße Betätigungselement für die Parksperre eines Getriebes weist eine Stellstange und einen Rollenträger auf. An dem Rollenträger sind eine erste Rolle und eine zweite Rolle angeordnet. Die erste Rolle ist an einer ersten Abrollbahn an einer verschwenkbaren Sperrklinke der Parksperre abrollbar. Die zweite Rolle ist an einer zweiten Abrollbahn an einem Führungsteil abrollbar, Bei einem solchen Führungsteil handelt es sich beispielsweise um ein feststehendes Führungsteil, das darüber hinaus als Teil des Gehäuses ausgebildet oder mit diesem fest verbunden sein kann. Der Rollenträger kann entlang eines vorbestimmten Weges in Längsrichtung der Stellstange verschoben werden. Im Gegensatz zu dem aus der DE 101 31 735 A1 bekannten Betätigungselement, ist der Rollenträger jedoch nicht in einer separaten, gehäuseseitigen Führung angeordnet, sondern längsverschiebbar auf der Stellstange selbst geführt.

Die Erfindung hat den Vorteil, dass keine bzw. keine aufwändige gehäuseseitige Führung für den Rollenträger erforderlich ist, da dieser auf der Stellstange selbst geführt ist. Hierdurch ist die Anzahl der Bauteile mit entsprechenden Verbindungsstellen reduziert, so dass das Betätigungselement insgesamt störungsunanfälliger ist und weniger Bauraum benötigt. Letzteres macht insbesondere den Einsatz des Betätigungselements in einer Parksperre mit axialer Klinkenbetätigung möglich. Darüber hinaus kann die Stellstange Klinkenbetätigung möglich. Darüber hinaus kann die Stellstange des Betätigungselements aufgrund der kompakten Konstruktion auch mehrere Biegungen aufweisen und muss nicht gerade ausgebildet sein. Hierdurch ist es möglich, die Stellstange zu fast jeder Stelle innerhalb der Parksperre zu führen, so dass eine annähernd beliebige Positionierung der weiteren Vorrichtungsteile, wie beispielsweise der Wählwelle und der Rastenscheibe, möglich ist.

Um eine besonders sichere Führung des Rollenträgers auf der Stellstange zu ermöglichen, erstreckt sich die Stellstange in einer bevorzugten Ausführungsform des erfindungsgemäßen Betätigungselements unabhängig von der Position des Rollenträgers auf der Stellstange vollständig durch den Rollenträger.

Damit die erste und die zweite Rolle unbeeinflusst von der Stellstange an den entsprechenden Abrollbahnen abrollen können, erstreckt sich die Stellstange in einer weiteren bevorzugten Ausführungsform des erfindungsgemäßen Betätigungselements zwischen die erste und die zweite Rolle. Auf diese Weise können die erste und die zweite Rolle auf ihren der Stellstange abgewandten Seiten an den Abrollbahnen abrollen.

In einer weiteren vorteilhaften Ausführungsform des erfindungsgemäßen Betätigungselements weisen die erste und die zweite Rolle Abrollflächen auf, wobei sich die Stellstange zwischen die Abrollflächen erstreckt. Hierbei erstreckt sich die Stellstange vorzugsweise mittig zwischen die Abrollflächen. Die mittige Anordnung ermöglicht eine besonders gleichmäßige Krafteinleitung von der Stellstange in den Rollenträger sowie ein sicheres Abrollen der Rollen.

Um die Rollen besonders dicht beieinander anordnen zu können, ist bei einer besonders bevorzugten Ausführungsform des erfindungsgemäßen Betätigungselements in mindestens der ersten oder der zweiten Rolle eine umlaufende Nut vorgesehen, durch die sich die Stellstange erstreckt. So können die Rollen derart dicht beieinander angeordnet werden, dass der Rollenträger mit den Rollen besonders klein ausgebildet ist, wodurch der benötigte Bauraum verringert wird.

In einer weiteren vorteilhaften Ausführungsform des erfindungsgemäßen Betätigungselements weist die umlaufende Nut einen bogenförmigen, vorzugsweise halbkreisförmigen Querschnitt auf. Hierdurch ist der Kraftfluss innerhalb der Rollen gleichmäßiger und eine Stellstange mit kreisrundem Querschnitt kann eng hindurchgeführt werden, wenn beide Rollen entsprechende umlaufende Nuten aufweisen.

In einer weiteren bevorzugten Ausführungsform des erfindungsgemäßen Betätigungselements ist in der ersten Rolle eine erste umlaufende Nut und in der zweiten Rolle eine zweite umlaufende Nut vorgesehen, wobei sich die die Stellstange durch die erste und die zweite Nut erstreckt. Dies ermöglicht, dass die Stellstange in der Mitte zwischen den Achsen der beiden Rollen geführt werden kann, wodurch eine sicherere Führung des Rollenträgers und eine gleichmäßige Krafteinleitung von der Stellstange in den Rollenträger gewährleistet ist.

Zu diesem Zweck sind in einer weiteren vorteilhaften Ausführungsform des erfindungsgemäßen Betätigungselements die erste umlaufende Nut und die zweite umlaufende Nut einander gegenüberliegend angeordnet.

Ferner sind zu diesem Zweck in einer weiteren bevorzugten Ausführungsform des erfindungsgemäßen Betätigungselements die erste umlaufende Nut und die zweite umlaufende Nut in der Mitte der Abrollflächen der ersten und der zweiten Rolle ausgebildet.

Um eine Stellstange mit kreisrundem Querschnitt kollisionsfrei durch die umlaufenden Nuten führen zu können, bilden die erste umlaufende Nut und die zweite umlaufende Nut in einer weiteren vorteilhaften Ausführungsform der Erfindung einen gemeinsamen Querschnitt aus, der im Wesentlichen kreisförmig ausgebildet ist.

Um den Rollenträger auf der Stellstange zu sichern, ist in einer weiteren bevorzugten Ausführungsform des erfindungsgemäßen Betätigungselements an der Stellstange ein radial hervorstehender erster Anschlag vorgesehen, gegen den der Rollenträger vorgespannt ist.

In einer weiteren bevorzugten Ausführungsform des erfindungsgemäßen Betätigungselements ist an der Stellstange ferner ein radial hervorstehender zweiter Anschlag vorgesehen, wobei zwischen dem zweiten Anschlag und dem Rollenträger eine Druckfeder angeordnet ist, mittels derer der Rollenträger gegen den ersten Anschlag vorgespannt ist. Bei der Druckfeder handelt es sich vorzugsweise um eine um die Stellstange gewundene Spiralfeder, da hierdurch ein besonders kompakter Aufbau erzielt werden kann.

Die erfindungsgemäße Parksperre weist das erfindungsgemäße Betätigungselement der vorbeschriebenen Art auf.

In einer bevorzugten Ausführungsform der erfindungsgemäßen Parksperre weist die Parksperre eine verschwenkbare Sperrklinke und ein drehfest mit der Abtriebswelle eines Getriebes verbundenes Parksperrenzahnrad auf, wobei die Stellstange mit dem Rollenträger von einer ersten Position, in der die Abtriebswelle nicht gesperrt ist, in eine zweite Position verschiebbar ist, in der die erste Rolle an der Sperrklinke und die zweite Rolle an einem Führungsteil derart abgestützt ist, dass die Sperrklinke mit dem Parksperrenzahnrad im Eingriff ist.

In einer vorteilhaften Ausführungsform der erfindungsgemäßen Parksperre ist an der Sperrklinke eine erste Abrollbahn zum Abrollen der ersten Rolle und an dem Führungsteil eine zweite Abrollbahn zum Abrollen der zweiten Rolle vorgesehen. Die erste und/oder zweite Abrollbahn können beispielsweise einen geneigten oder rampenartigen Verlauf aufweisen.

Da bei einer Parksperre mit so genannter axialer Sperrklinkenbetätigung besonders wenig Bauraum zur Verfügung steht, ist die Sperrklinke in einer besonders bevorzugten Ausführungsform der erfindungsgemäßen Parksperre um eine Drehachse verschwenkbar, wobei der Rollenträger beim Verschieben der Stellstange von der ersten in die zweite Position bezogen auf die Drehachse in axialer Richtung zwischen das Führungsteil und die Sperrklinke bewegt werden kann. Bei einer solchen Parksperre kommen die Vorteile des Betätigungselements , nämlich der kompakte Aufbau desselben, besonders zum Tragen.

Die Erfindung wird im Folgenden anhand einer beispielhaften Ausführungsform unter Bezugnahme auf die zugehörigen Zeichnungen näher erläutert.
Es zeigen:
- Fig. 1: eine teilweise Seitenansicht einer Ausführungsform des er- findungsgemäßen Betätigungselements in geschnittener Darstellung,
- Fig. 2: eine Draufsicht auf die Schnittlinie A-A von Fig. 1,
- Fig. 3: eine teilweise Seitenansicht einer Ausführungsform der er- findungsgemäßen Parksperre mit dem Betätigungselement aus den Fig. 1 und 2 in geschnittener Darstellung und
- Fig. 4: eine Ansicht in Richtung des Pfeils B von Fig. 3 in teilweise geschnittener Darstellung.

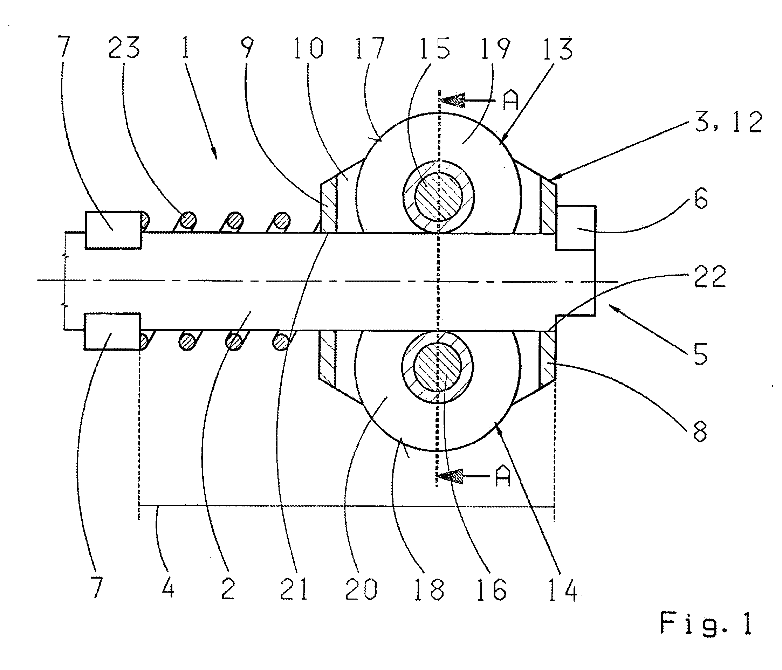

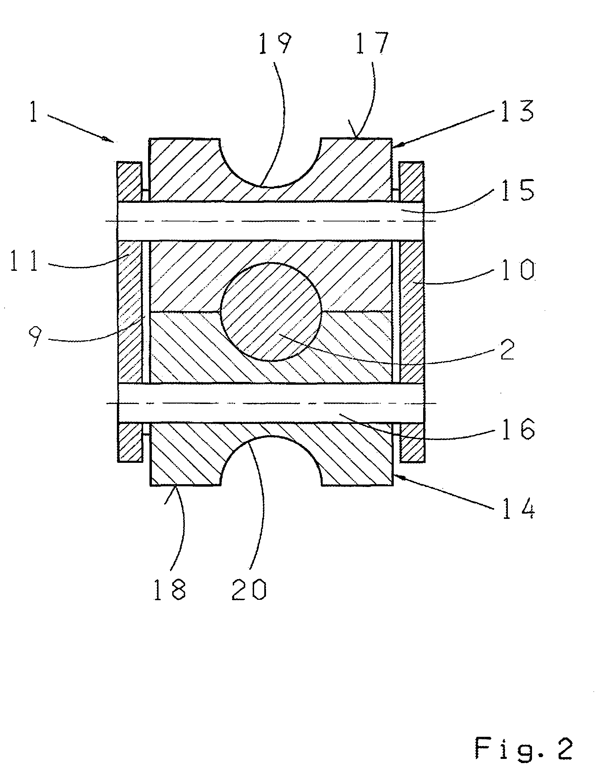

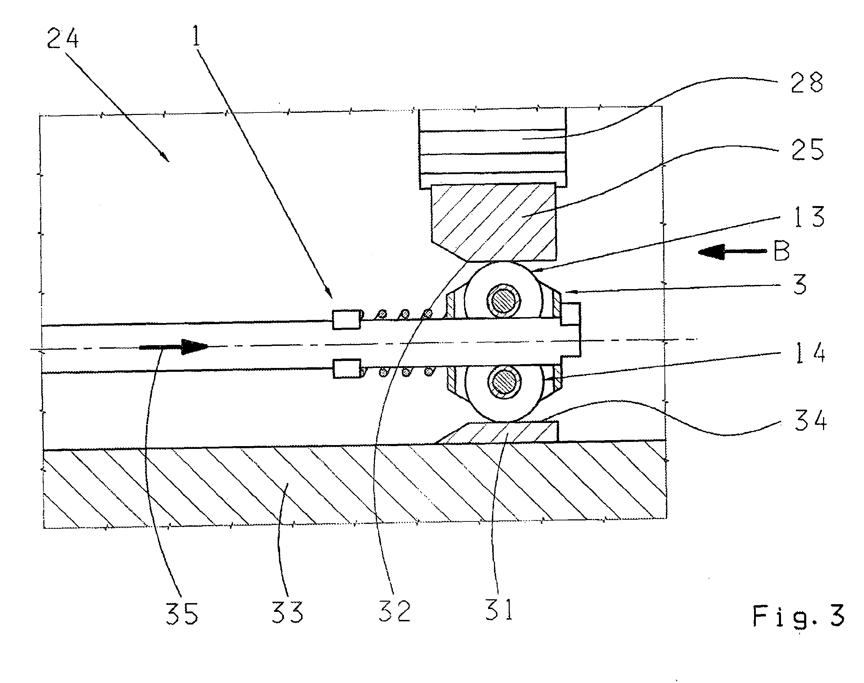

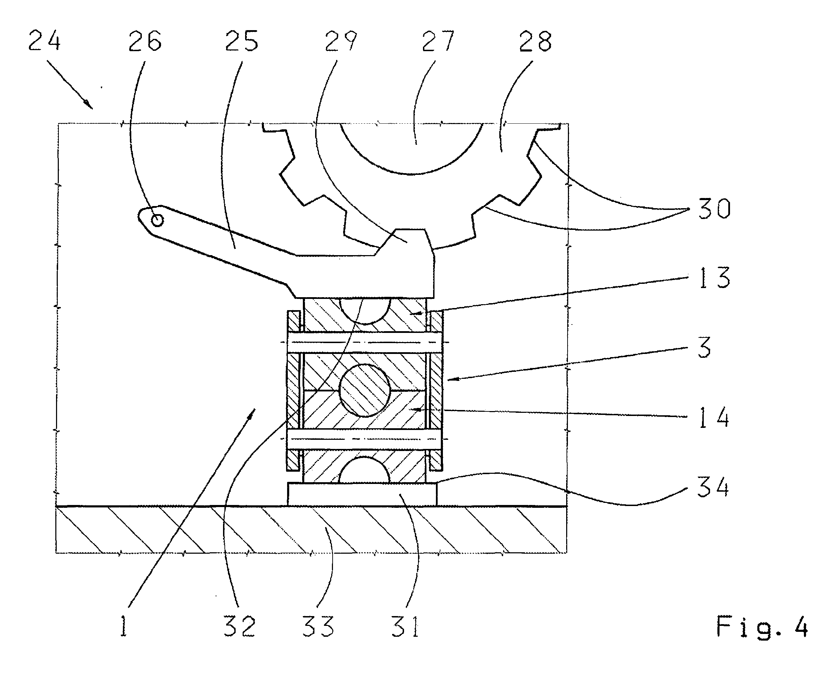

Die Fig. 1 und 2 zeigen zunächst eine Ausführungsform des erfindungsgemäßen Betätigungselements 1 für eine Parksperre eines Getriebes, wobei die Parksperre später unter Bezugnahme auf die Fig. 3 und 4 näher beschrieben wird. Das Betätigungselement 1 weist eine Stellstange 2 und einen Rollenträger 3 auf. Die Stellstange 2 umfasst einen gerade ausgebildeten Endabschnitt 4, an dessen freiem Ende 5 ein radial hervorstehender erster Anschlag 6 und an dessen anderem Ende ein radial hervorstehender zweiter Anschlag 7 ausgebildet ist.

Der Rollenträger 3 umfasst eine Vorderwand 8, eine der Vorderwand 8 gegenüberliegende Rückwand 9 und zwei sich gegenüberliegende Seitenwände 10, 11, die gemeinsam ein rohrförmiges, nach oben und unten geöffnetes Gehäuse 12 ausbilden. Innerhalb des Rollenträgers 3 sind eine erste Rolle 13 und eine zweite Rolle 14 angeordnet. Die erste Rolle 13 ist drehbar auf einer ersten Achse 15 und die zweite Rolle 14 ist drehbar auf einer zweiten Achse 16 angeordnet, wobei die erste und zweite Achse 15, 16 parallel zueinander verlaufen. Die beiden Achsen 15, 16 sind seitlich jeweils an den Seitenwänden 10, 11 befestigt, wie dies insbesondere in Fig. 2 zu erkennen ist. Die erste Achse 15 und die zweite Achse 16 sind dabei derart an den Seitenwänden 10, 11 angeordnet, dass die erste Rolle 13 nach oben und die zweite Rolle 14 nach unten aus dem Gehäuse 12 hervorsteht, so dass die am Umfang der Rollen 13, 14 ausgebildeten Abrollflächen 17, 18 nach außen hervorstehen. Die Achsen 15, 16 können auch mit den Rollen 13, 14 einstückig verbunden sein und als Zapfen in die Seitenwände 10, 11 eingreifen.

In der Abrollfläche 17 der ersten Rolle 13 ist eine mittig angeordnete erste umlaufende Nut 19 vorgesehen, während in die Abrollfläche 18 der zweiten Rolle 14 eine mittig angeordnete zweite umlaufende Nut 20 eingelassen ist, wobei sich der Begriff mittig hierbei auf die Breitenrichtung der Rollen 13, 14 zwischen den beiden Seitenwänden 10, 11 bezieht. Sowohl die erste umlaufende Nut 19 als auch die zweite umlaufende Nut 20 weisen einen bogenförmigen, im vorliegenden Beispiel einen halbkreisförmigen Querschnitt auf, wie dies der Fig. 2 zu entnehmen ist. Darüber hinaus sind die erste und zweite umlaufende Nut 19, 20 einander gegenüberliegend in den Abrollflächen 17, 18 der Rollen 13, 14 angeordnet, so dass die erste umlaufende Nut 19 und die zweite umlaufende Nut 20 auf ihren einander zugewandten Seiten einen gemeinsamen Querschnitt ausbilden, der im Wesentlichen kreisförmig ausgebildet ist.

Wie in Fig. 1 gezeigt ist in der Rückwand 9 und in der Vorderwand 8 des Rollenträgers 3 jeweils eine mittig angeordnete kreisrunde Öffnung 21, 22 vorgesehen, die in etwa den Durchmesser der Stellstange 2 aufweist. Die Stellstange 2 bzw. deren Endabschnitt 4 erstreckt sich vollständig durch den Rollenträger 3, d.h. die Stellstange 2 verläuft durch die Öffnung 21 in der Rückwand 9, zwischen der ersten und zweiten Rolle 13.14 durch die erste und zweite umlaufende Nut 19, 20 sowie durch die Öffnung 22 in der Vorderwand 8 Somit ist der Rollenträger 3 im Bereich der Öffnungen 21, 22 längsverschiebbar auf der Stellstange 2 zwischen den Anschlägen 6 und 7 geführt. Durch den Abstand zwischen dem ersten und zweiten Anschlag 6, 7 ist ferner eine Wegstrecke vorgegeben, entlang derer der auf der Stellstange 2 geführte Rollenträger 3 verschoben werden kann.

Zwischen dem zweiten Anschlag 7 und der Rückwand 9 des Rollenträgers 3 ist weiterhin eine Druckfeder 23 angeordnet, so dass der Rollenträger 3 mit seiner Vorderwand 8 gegen den ersten Anschlag 6 vorgespannt ist. Die Druckfeder 23 ist dabei als eine die Stellstange 2 im Bereich des Endabschnitts 4 umschlingende Spiralfeder ausgebildet, so dass ein besonders kompakter Aufbau erzielt wird.

Die Fig. 3 und 4 zeigen eine Ausführungsform der erfindungsgemäßen Parksperre 24 mit dem zuvor beschriebenen Betätigungselement 1. Die Parksperre 24 weist eine Sperrklinke 25 auf, die um eine Drehachse 26 verschwenkbar ist. Ferner ist ein drehfest mit der Abtriebswelle 27 eines nicht näher dargestellten Automatikgetriebes verbundenes Parksperrenzahnrad 28 vorgesehen. Die Drehachse 26 der Sperrklinke 25 und die Längsachse (kein Bezugszeichen) der Abtriebswelle 27 erstrecken sich parallel zueinander. Auf der dem Umfang des Parksperrenzahnrades 28 zugewandten Seite der Sperrklinke 25 ist ferner ein Rastzahn 29 angeordnet, während am Umfang des Parksperrenzahnrades 28 entsprechende Rastvertiefungen 30 vorgesehen sind. An der dem Rastzahn 29 abgewandten bzw. einem Führungsteil 31 zugewandten Seite der Sperrklinke 25 ist eine erste Abrollbahn 32 vorgesehen. An dem Gehäuse der Parksperre 24, das in den Figuren mit dem Bezugszeichen 33 gekennzeichnet ist, ist das feststehende Führungsteil 31 befestigt. Das der Sperrklinke 25 gegenüberliegende Führungsteil 31 weist auf seiner der Sperrklinke 25 zugewandten Seite eine zweite Abrollbahn 34 auf, die - wie auch die erste Abrollbahn 31 - rampenartig aufgebaut ist.

Das dem Rollenträger 3 abgewandte Ende der Stellstange 2 ist mit einer nicht dargestellten Rastenscheibe verbunden, die über einen Wählhebel rotiert werden kann, so dass die Stellstange 2 bei entsprechender Drehung des Wählhebels in Richtung des Pfeils 35 von einer ersten Position, in der die Abtriebswelle 27 nicht gesperrt ist, in eine zweite Position verschoben werden kann, die in den Fig. 3 und 4 gezeigt ist. Durch die Verschiebung der Stellstange 2 mitsamt dem Rollenträger 3 rollt die erste Rolle 13 an der rampenartigen Abrollbahn 32 an der Sperrklinke 25 ab, während die zweite Rolle 14 die rampenartige Abrollbahn 34 an dem Führungsteil 31 emporrollt. Indem die Rollen 13, 14 zwischen das Führungsteil 31 einerseits und die Sperrklinke 25 andererseits geschoben werden, wird die Sperrklinke 25 um die Drehachse 26 verschwenkt bis der Rastzahn 29 der Sperrklinke 25 in eine der Rastvertiefungen 30 eingreift. In dieser zweiten Position ist die Abtriebswelle 27 des Automatikgetriebes somit gesperrt, eine weitere Drehung derselben ist unterbunden.

Bei der dargestellten Parksperre 24 kommt eine so genannte axiale Sperrklinkenbetätigung zum Einsatz. Hierbei wird der Rollenträger 3 mitsamt den Rollen 13, 14 bezogen auf die Drehachse 26 der Sperrklinke 25 in axialer Richtung zwischen das Führungsteil 31 und die Sperrklinke 25 bewegt, um die Sperrklinke 25 zu verschwenken. Da bei einer derartigen Parksperre 24 besonders wenig Bauraum zur Verfügung sieht, kommen die Vorteile des Betätigungselements 1 hier besonders zum Tragen.

### Bezugszeichen

- 1: Betätigungselement
- 2: Stellstange
- 3: Rollenträger
- 4: Endabschnitt
- 5: freies Ende
- 6: erster Anschlag
- 7: zweiter Anschlag
- 8: Vorderwand
- 9: Rückwand
- 10: Seitenwand
- 11: Seitenwand
- 12: Gehäuse des Rollenträgers
- 13: erste Rolle
- 14: zweite Rolle
- 15: erste Achse
- 16: zweite Achse
- 17: erste Abrollfläche
- 18: zweite Abrollfläche
- 19: erste umlaufende Nut
- 20: zweite umlaufende Nut
- 21: Öffnung
- 22: Öffnung
- 23: Druckfeder
- 24: Parksperre
- 25: Sperrklinke
- 26: Drehachse
- 27: Abtriebswelle
- 28: Parksperrenzahnrad
- 29: Rastzahn
- 30: Rastvertiefungen
- 31: Führungsteil
- 32: erste Abrollbahn
- 33: Gehäuse der Parksperre
- 34: zweite Abrollbahn
- 35: Pfeil

## Patentansprüche

1. Betätigungselement für die Parksperre eines Getriebes mit einer Stellstange (2) und einem Rollenträger (3), an dem eine erste Rolle (13) zum Abrollen an einer ersten Abrollbahn an der verschwenkbaren Sperrklinke der Parksperre und eine zweite Rolle (14) zum Abrollen an einer zweiten Abrollbahn an einem Führungsteil angeordnet sind, wobei der Rollenträger (3) entlang eines vorbestimmten Weges in Längsrichtung der Stellstange (2) verschiebbar ist, **dadurch gekennzeichnet, dass** sich die Stellstange (2) zwischen die erste und die zweite Rolle (13, 14) erstreckt, wobei der Rollenträger (3) längsverschiebbar auf der Stellstange (2) geführt ist.

2. Betätigungselement nach Anspruch 1, **dadurch gekennzeichnet, dass** sich die Stellstange (2) unabhängig von der Position des Rollenträgers (3) auf der Stellstange (2) vollständig durch den Rollenträger (3) erstreckt.

3. Betätigungselement nach Anspruch 1 oder 2, **dadurch gekennzeichnet, dass** die erste und die zweite Rolle (13, 14) Abrollflächen (17, 18) aufweisen, wobei sich die Stellstange (2), vorzugsweise mittig, zwischen die Abrollflächen (17, 18) erstreckt.

4. Betätigungselement nach einem der Ansprüche 1 bis 3, **dadurch gekennzeichnet, dass** in mindestens der ersten oder der zweiten Rolle (13, 14) eine umlaufende Nut (19, 20) vorgesehen ist, durch die sich die Stellstange (2) erstreckt.

5. Betätigungselement nach Anspruch 4, **dadurch gekennzeichnet, dass** die umlaufende Nut (19,20) einen bogenförmigen, vorzugsweise halbkreisförmigen Querschnitt aufweiset.

6. Betätigungselement nach einem der Ansprüche 4 oder 5, **dadurch gekennzeichnet, dass** in der, ersten Rolle (13) eine erste umlaufende Nut (19) und in der zweiten Rolle (14) eine zweite umlaufende Nut (20) vorgesehen ist, durch die sich die Stellstange (2) erstreckt.

7. Betätigungselement nach Anspruch 6, **dadurch gekennzeichnet, dass** die erste umlaufende Nut (19) und die zweite umlaufende Nut (20) einander gegenüberliegend angeordnet sind.

8. Betätigungselement nach Anspruch 7, **dadurch gekennzeichnet, dass** die erste umlaufende Nut (19) und die zweite umlaufende Nut (20) in der Mitte der Abrollfläche (17,18) der ersten und zweiten Rolle (13, 14) ausgebildet sind.

9. Betätigungselement nach einem der Ansprüche 7 oder 8, **dadurch gekennzeichnet, dass** die erste umlaufende Nut (19) und die zweite umlaufende Nut (20) einen gemeinsamen Querschnitt ausbilden, der im Wesentlichen kreisförmig ausgebildet ist.

10. Betätigungselement nach einem der vorangehenden Ansprüche, **dadurch gekennzeichnet, dass** an der Stellstange (2) ein radial hervorstehender erster Anschlag (6) vorgesehen ist, gegen den der Rollenträger (3) vorgespannt ist.

11. Betätigungselement nach Anspruch 10, **dadurch gekennzeichnet, dass** an der Stellstange (2) ein radial hervorstehender zweiter Anschlag (7) vorgesehen ist, wobei zwischen dem zweiten Anschlag (7) und dem Rollenträger (3) eine Druckfeder (23) angeordnet ist, mittels derer der Rollenträger (3) gegen den ersten Anschlag (6) vorgespannt ist.

12. Parksperre mit einem Betätigungselement (1) nach einem der vorangehenden Ansprüche.

13. Parksperre nach Anspruch 12, **dadurch gekennzeichnet, dass** die Parksperre (24) eine verschwenkbare Sperrklinke (25) und ein drehfest mit der Abtriebswelle eines Getriebes verbundenes Parksperrenzahnrad (28) aufweist, wobei die Stellstange (2) mit dem Rollenträger (3) von eine ersten Position, in der die Abtriebswelle nicht gesperrt ist, in eine zweite Position verschiebbar ist, in der die erste Rolle (13) an der Sperrklinke (25) und die zweite Rolle (14) an einem, Führungsteil (31) derart abgestützt ist, dass die Sperrklinke (25) mit dem Parksperrenzahnrad (28) im Eingriff ist.

14. Parksperre nach Anspruch 13, **dadurch gekennzeichnet, dass** an der Sperrklinke (25) eine erste Abrollbahn (32) zum Abrollen der ersten Rolle (13) und an dem Führungsteil (31) eine zweite Abrollbahn (34) zum Abrollen der zweiten Rolle (14) vorgesehen ist.

15. Parksperre nach einem der Ansprüche 13 oder 14, **dadurch gekennzeichnet, dass** die Sperrklinke (25) um eine Drehachse (26) verschwenkbar ist, wobei der Rollenträger (3) beim Verschieben der Stellstange (2) von der ersten in die zweite Position bezogen auf die Drehachse (26) in axialer Richtung zwischen das Führungsteil (31) und die Sperrklinke (25) belegbar ist.

## Claims

1. Actuating element for the parking lock of a transmission, with an actuating rod (2) and with a roller carrier (3), on which are arranged a first roller (13) for rolling on a first rolling track on the pivotable detent pawl of the parking lock and a second roller (14) for rolling on a second rolling track on a guide part, the roller carrier (3) being displaceable along a predetermined travel in the longitudinal direction of the actuating rod (2), **characterized in that** the actuating rod (2) extends between the first and the second roller (13, 14), the roller carrier (3) being guided longitudinally displacably on the actuating rod (2).

2. Actuating element according to Claim 1, **characterized in that** the actuating rod (2) extends completely through the roller carrier (3) independently of the position of the roller carrier (3) on the actuating rod (2).

3. Actuating element according to Claim 1 or 2, **characterized in that** the first and the second roller (13, 14) have rolling faces (17, 18), the actuating rod (2) extending preferably centrally between the rolling faces (17, 18).

4. Actuating element according to one of Claims 1 to 3, **characterized in that** a peripheral groove (19, 20), through which the actuating rod (2) extends, is provided in at least the first or the second roller (13, 14).

5. Actuating element according to Claim 4, **characterized in that** the peripheral groove (19, 20) has an arcuate, preferably semicircular cross section.

6. Actuating element according to either one of Claims 4 and 5, **characterized in that** a first peripheral groove (19) is provided in the first roller (13) and a second peripheral groove (20) is provided in the second roller (14), through which grooves the actuating rod (2) extends.

7. Actuating element according to Claim 6, **characterized in that** the first peripheral groove (19) and the second peripheral groove (20) are arranged opposite one another.

8. Actuating element according to Claim 7, **characterized in that** the first peripheral groove (19) and the second peripheral groove (20) are formed in the middle of the rolling face (17, 18) of the first and of the second roller (13, 14).

9. Actuating element according to either one of Claims 7 and 8, **characterized in that** the first peripheral groove (19) and the second peripheral groove (20) form a common cross section which is of essentially circular design.

10. Actuating element according to one of the preceding claims, **characterized in that** a radially projecting first stop (6), against which the roller carrier (3) is prestressed, is provided on the actuating rod (2).

11. Actuating element according to Claim 10, **characterized in that** a radially projecting second stop (7) is provided on the actuating rod (2), there being arranged between the second stop (7) and the roller carrier (3) a compression spring (23), by means of which the roller carrier (3) is prestressed against the first stop (6).

12. Parking lock having an actuating element (1) according to one of the preceding claims.

13. Parking lock according to Claim 12, **characterized in that** the parking lock (24) has a pivotable detent pawl (25) and a parking-lock gearwheel (28) connected fixedly in terms of rotation to the output shaft of a transmission, the actuating rod (2), together with the roller carrier (3), being displaceable from a first position, in which the output shaft is not locked, into a second position, in which the first roller (13) is supported on the detent pawl (25) and the second roller (14) is supported on a guide part (31), in such a way that the detent pawl (25) is in engagement with the parking-lock gearwheel (28).

14. Parking lock according to Claim 13, **characterized in that** a first rolling track (32) for the rolling of the first roller (13) is provided on the detent pawl (25) and a second rolling track (34) for the rolling of the second roller (14) is provided on the guide part (31).

15. Parking lock according to either one of Claims 13 and 14, **characterized in that** the detent pawl (25) is pivotable about an axis of rotation (26), the roller carrier (3) being movable between the guide part (31) and the detent pawl (25) in the axial direction with respect to the axis of rotation (26) during the displacement of the actuating rod (2) from the first position into the second position.

## Revendications

1. Elément d'actionnement pour le frein de stationnement d'une transmission comprenant une tringle de commande (2) et un support de rouleaux (3), sur lequel sont disposés un premier rouleau (13) prévu pour rouler sur une première piste de roulement sur le cliquet d'arrêt pivotant du frein de stationnement et un deuxième rouleau (14) prévu pour rouler sur une deuxième piste de roulement sur une partie de guidage, le support de rouleaux (3) pouvant être déplacé le long d'une course prédéterminée dans la direction longitudinale de la tringle de commande (2), **caractérisé en ce que** la tringle de commande (2) s'étend entre le premier et le deuxième rouleau (13, 14), le support de rouleaux (3) étant guidé de manière déplaçable longitudinalement sur la tringle de commande (2).

2. Elément d'actionnement selon la revendication 1, **caractérisé en ce que** la tringle de commande (2) s'étend, indépendamment de la position du support de rouleaux (3) sur la tringle de commande (2), complètement à travers le support de rouleaux (3).

3. Elément d'actionnement selon la revendication 1 ou 2, **caractérisé en ce que** le premier et le deuxième rouleau (13, 14) présentent des surfaces de roulement (17, 18), la tringle de commande (2) s'étendant de préférence centralement entre les surfaces de roulement (17, 18).

4. Elément d'actionnement selon l'une quelconque des revendications 1 à 3, **caractérisé en ce qu'**une rainure périphérique (19, 20) est prévue dans au moins le premier ou le deuxième rouleau (13, 14), à travers laquelle s'étend la tringle de commande (2).

5. Elément d'actionnement selon la revendication 4, **caractérisé en ce que** la rainure périphérique (19, 20) présente une section transversale en forme d'arc, de préférence une section transversale en forme de demi-cercle.

6. Elément d'actionnement selon l'une quelconque des revendications 4 ou 5, **caractérisé en ce qu'**une première rainure périphérique (19) est prévue dans le premier rouleau (13) et une deuxième rainure périphérique (20) est prévue dans le deuxième rouleau (14), à travers lesquelles s'étend la tringle de commande (2).

7. Elément d'actionnement selon la revendication 6, **caractérisé en ce que** la première rainure périphérique (19) et la deuxième rainure périphérique (20) sont disposées l'une en face de l'autre.

8. Elément d'actionnement selon la revendication 7, **caractérisé en ce que** la première rainure périphérique (19) et la deuxième rainure périphérique (20) sont réalisées au milieu de la surface de roulement (17, 18) du premier et du deuxième rouleau (13, 14).

9. Elément d'actionnement selon l'une quelconque des revendications 7 ou 8, **caractérisé en ce que** la première rainure périphérique (19) et la deuxième rainure périphérique (20) forment une section transversale commune qui est réalisée essentiellement sous forme circulaire.

10. Elément d'actionnement selon l'une quelconque des revendications précédentes, **caractérisé en ce qu'**une première butée (6) saillant radialement est prévue sur la tringle de commande (2), contre laquelle le support de rouleaux (3) est précontraint.

11. Elément d'actionnement selon la revendication 10, **caractérisé en ce qu'**une deuxième butée (7) saillant radialement est prévue sur la tringle de commande (2), un ressort de compression (23) étant prévu entre la deuxième butée (7) et le support de rouleaux (3), par le biais duquel le support de rouleaux (3) peut être précontraint contre la première butée (6).

12. Frein de stationnement comprenant un élément d'actionnement (1) selon l'une quelconque des revendications précédentes.

13. Frein de stationnement selon la revendication 12, **caractérisé en ce que** le frein de stationnement (24) présente un cliquet d'arrêt pivotant (25) et une roue dentée de frein de stationnement (28) connectée de manière solidaire en rotation à l'arbre de sortie d'une transmission, la tringle de commande (2) pouvant être déplacée avec le support de rouleaux (3) d'une première position dans laquelle l'arbre de sortie n'est pas bloqué, dans une deuxième position dans laquelle le premier rouleau (13) est supporté contre le cliquet d'arrêt (24) et le deuxième rouleau (14) est supporté contre une partie de guidage (31) de telle sorte que le cliquet d'arrêt (25) est en prise avec la roue dentée du frein de stationnement (28).

14. Frein de stationnement selon la revendication 13, **caractérisé en ce qu'**une première piste de roulement (32) pour le roulement du premier rouleau (13) est prévue sur le cliquet d'arrêt (25) et une deuxième piste de roulement (34) pour le roulement du deuxième rouleau (14) est prévue sur la partie de guidage (31).

15. Frein de stationnement selon l'une quelconque des revendications 13 ou 14, **caractérisé en ce que** le cliquet d'arrêt (25) peut pivoter autour d'un axe de rotation (26), le support de rouleaux (3) pouvant être déplacé lors du déplacement de la tringle de commande (2) de la première dans la deuxième position par rapport à l'axe de rotation (26) dans la direction axiale entre la partie de guidage (31) et le cliquet d'arrêt (25).
